# EUROPEAN PATENT APPLICATION

(11) **EP 2 985 147 A1**
(43) Date of publication of application: **17.02.2016**
(21) Application number: 14782583.0
(22) Date of filing: 09.04.2014
(51) Int. Cl.: B32B 27/08, C09J 7/02

(54) **SCRATCH-RESISTANT MATTE LAMINATING FILM AND MANUFACTURING METHOD THEREFOR**

(30) Priority: 09.04.2013 CN 201310121822
(71) Applicant: Jiangsu Kangdexin Composite Material Co., Ltd., Zhangjigang, Jiangsu 214634 (CN)
(72) Inventor: ZHONG, Yu, Beijing 102200 (CN); WU, Jun, Beijing 102200 (CN); WANG, Huirong, Beijing 102200 (CN)
(74) Representative: Zumstein, Angela
(86) International application number: PCT/CN2014/075002
(87) International publication number: WO 2014/166391

(57) **Abstract**

A scratch-resistant matte laminating film and a manufacturing method therefor. The scratch-resistant matte laminating film comprises a scratch-resistant matte substrate (1), an intermediate layer (2), and a hot-melt adhesive layer (3). The intermediate layer (2) is formed between the scratch-resistant matte substrate (1) and the hot-melt adhesive layer (3). The scratch-resistant matte substrate (1) is constituted by a polymeric film layer (4) and a scratch-resistant matte coating layer (5), where the scratch-resistant matte coating layer (5) is formed on the lower surface of the polymeric film layer (4).

## Description

### FIELD

The present disclosure relates to a printing coating technical field, more particularly, to a matte thermal laminating film with a scratch resistant property and a preparing method of the same.

### BACKGROUND

A thermal laminating film is a very important soft packaging material for a printing product. Such a product has a characteristic of a security and environmental protection, easy operation, energy saving, an excellent property and so on in use, and a proportion of the market is increasing step by step. A good protective effect of a water resistance, a tear resistance and so on can be obtained, if a thermal laminating film is covered on the surface of the printing product such as a paper printing object and a package. Particularly, a gentle and profound sensation are given by the matte thermal laminating film through a diffuse reflection for a light, however a scoring and/or scuffing is generated in the packaging material processed with the matte thermal laminating film under external force because the packaging material is in contact with a stiff object usually during a transportation and a normal use, and thus a beauty of the packaging material is influenced.

CN102816512 discloses that: a scratch resistant aqueous woodware paint, which consists of an acrylic acid modified polyurethane emulsion, a film-forming agent, a defoamer, deionized water, a wetting agent, an aralkyl modified polymethyl alkyl silicon solution with a mass ratio of 48 % to 52%, a wax emulsion, a thickening agent and an antiseptic. However, the paint disclosed in CN102816512 is only suitable for a woodware material, and a coating layer with a scratch resistant property is formed on the surface of a wooden furniture.

CN101564720 discloses that: a method for preparing a wear-resisting scratch resistant coating layer for a biaxially oriented polyester film surface, comprising: mixing polyurethane hexaacrylate, an epoxy modified acrylate, dipentaerythritol hydroxy hexaacrylate, trimethylolpropane triacrylate, tripropylene glycol diacrylate, butyl titanate and a composited degradation photoinitiator uniformly to obtain a paint; then coating the paint on a BOPET film surface treated by electric corona, and then subjecting to an ultraviolet light curing, and thus a wear-resisting scratch resistant coating layer for a biaxially oriented polyester film surface is obtained. However, an ultraviolet curing is needed for the wear-resisting scratch resistant coating layer for a biaxially oriented polyester film surface disclosed in CN101564720.

CN201702995 discloses that: a scratch resistant matte thermal laminating film for biaxially oriented polypropylene, comprising: a substrate, an intermediate layer and a hot melt adhesive layer. The substrate is a scratch resistant biaxially oriented polypropylene matte film, i.e. the substrate consists of a matte polypropylene layer and a scratch resistant coating layer. A thickness of the matte polypropylene layer ranges from 12 microns to 16.5 microns, and a thickness of the scratch resistant coating layer ranges from 2 microns to 3.5 microns. The intermediate layer and the hot melt adhesive layer is coated uniformly and composited on a surface of the matte polypropylene layer of the substrate; a thickness of the substrate ranges from 14 microns to 20 microns, a thickness of the intermediate layer ranges from 0.01 microns to 0.03 microns, and a thickness of the hot melt adhesive layer ranges from 10 microns to 20 microns. At present, in a thermal laminating film industry, demands for the scratch resistance of the matte thermal laminating film are proposed by more and more high-end clients. In order to cope with a market demand, a development of the scratch resistant matte thermal laminating film is extremely urgent.

### SUMMARY

Embodiments of the present disclosure seek to solve at least one of the problems existing in the related art to at least some extents. Therefore, a matte thermal laminating film with a scratch resistance and a preparing method thereof are provided.

In a first aspect of the present disclosure, a scratch resistant matte thermal laminating film is provided. The scratch resistant matte thermal laminating film comprises a scratch resistant matte substrate, an intermediate layer and a hot melt adhesive layer, in which the intermediate layer is formed between the scratch resistant matte substrate and the hot melt adhesive layer. According to embodiments of the present disclosure, the scratch resistant matte substrate is composed by a polymer film layer and a scratch resistant matte coating layer, in which the scratch resistant matte coating layer is formed on a lower surface of the polymer film layer. A better scratch resistant ability can be provided by such a thermal laminating film, and thus a probability of generating a scuffing is decreased during transportation and use, and a perfect appearance of the printing object is maintained. Meanwhile, a higher surface tension is maintained by such a thermal laminating film, and an elegant and steady impression of the printing product is given by the matte and high haze of the thermal laminating film, and therefore a product quality is promoted, and the demands of high-end customers in the thermal laminating film industry are satisfied.

In a second aspect of the present disclosure, a method for preparing the scratch resistant matte thermal laminating film mentioned above is provided. According to embodiments of the present disclosure, the method comprises: performing an electric corona treatment on an surface of a scratch resistant matte substrate; forming an intermediate layer on the surface of the scratch resistant matte substrate processed through the electric corona treatment; drying the scratch resistant matte substrate with the intermediate layer at 85 °C to 95 °C; and forming the hot melt adhesive layer on the intermediate layer by using an extruder after the drying, so as to obtain the scratch resistant matte thermal laminating film. In some embodiments, the scratch resistant matte substrate is obtained by: providing a polymer film layer, in which the polymer film layer is formed by at least one selected from biaxially oriented polypropylene, biaxially oriented polyester and biaxially oriented nylon; coating a scratch resistant matte varnish on a lower surface of the polymer film layer by a roller, so as to form a scratch resistant matte coating layer; and performing a drying treatment to form the scratch resistant matte substrate. A better scratch resistant ability can be provided by the thermal laminating film obtained by the method, and thus a probability of generating a scuffing is decreased during transportation and use, and a perfect appearance of the printing object is maintained. Meanwhile, a higher surface tension is maintained by the thermal laminating film prepared by the method, and an elegant and steady impression of the printing product is given by the matte and high haze of the thermal laminating film, and therefore a product quality is promoted, and the demands of high-end customers in the thermal laminating film industry are satisfied.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:

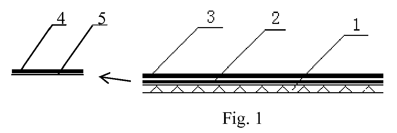

Fig. 1 is a schematic cross-sectional view of a scratch resistant matte thermal laminating film according to embodiments of the present disclosure, in which
   1 represents a scratch resistant matte substrate, 2 represents an intermediate layer, 3 represents a hot melt adhesive layer, 4 represents a polymer film layer, 5 represents a scratch resistant matte coating layer.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In a first aspect of the present disclosure, a scratch resistant matte thermal laminating film is provided. According to embodiments of the present disclosure, as shown in Fig. 1, the scratch resistant matte thermal laminating film comprises a scratch resistant matte substrate 1, an intermediate layer 2 and a hot melt adhesive layer 3, in which the intermediate layer 2 is formed between the scratch resistant matte substrate 1 and the hot melt adhesive layer 3. According to embodiments of the present disclosure, the width of the scratch resistant matte substrate 1, the intermediate layer 2 and the hot melt adhesive layer 3 is identical. According to embodiments of the present disclosure, the scratch resistant matte substrate 1 is composed by a polymer film layer 4 and a scratch resistant matte coating layer 5, in which the scratch resistant matte coating layer 5 is formed on a lower surface of the polymer film layer 4. A better scratch resistant ability can be provided by the scratch resistant matte thermal laminating film according to embodiments of the present disclosure, and thus a probability of generating a scuffing is decreased during transportation and use, and a perfect appearance of the printing object is maintained. Meanwhile, a higher surface tension is maintained by such a thermal laminating film, and an elegant and steady impression of the printing product is given by the matte and high haze of the thermal laminating film, and therefore a product quality is promoted, and the demands of high-end customers in the thermal laminating film industry are satisfied.

According to embodiments of the present disclosure, the polymer film layer 4 is formed by at least one selected from biaxially oriented polypropylene (BOPP), biaxially oriented polyester (BOPET) and biaxially oriented nylon (BOPA). According to embodiments of the present disclosure, a thickness of the polymer film layer 4 ranges from 12 microns to 100 microns, and a thickness of the scratch resistant matte coating layer 5 ranges from 1 micron to 10 microns. According to embodiments of the present disclosure, the scratch resistant matte coating layer 5 is formed by coating a scratch resistant varnish on the lower surface of the polymer film layer 4, in which the scratch resistant varnish comprises: 60 weight parts to 90 weight parts of a polyurethane dispersion; 1 weight part to 10 weight parts of a scratch resistant agent; 3 weight parts to 10 weight parts of an extinction agent; 0.05 weight parts to 0.2 weight parts of a flatting and wetting agent; 0.1 weight parts to 0.5 weight parts of a defoamer; and 1 weight part to 15 weight parts of a cross-linking curing agent. According to embodiments of the present disclosure, the scratch resistant varnish further comprises 1 weight part to 5 weight parts of a film-forming agent. According to embodiments of the present disclosure, a type of the scratch resistant matte varnish is not limited especially, and it can be an aqueous or solvent type.

According to embodiments of the present disclosure, the above-mentioned polyurethane dispersion is at least one selected from an acrylic acid-modified polyurethane dispersion, a polyester-modified polyurethane dispersion, a polycarbonate-modified polyurethane dispersion and an aliphatic series-modified polyurethane dispersion. According to examples of the present disclosure, a solid content of the polyurethane dispersion ranges from 20 wt% to 40 wt%, and a mass percentage of hydroxyl in the polyurethane dispersion ranges from 1 wt% to 4 wt%. The polyurethane dispersion used in the present disclosure is a main film-forming substance of the scratch resistant matte coating layer, a higher content of hydroxyl and (or) carboxyl in the polyurethane dispersion is demanded, for performing a cross linking reaction with a curing agent, meanwhile a substrate wettability and film-forming property of the polyurethane dispersion is demanded.

According to embodiments of the present disclosure, the above-mentioned scratch resistant agent is at least one selected from silica, silicone resin, methyl methacrylate (PMMA), PE wax powder and PTFE wax powder, in which the scratch resistant agent has an average particle diameter in the range of 1 micron to 10 microns, and a melting point of equal to or higher than 110 °C, and a specific weight in the range of 0.9 g/cm³ to 1.1 g/cm³. The scratch resistant agent used in the present disclosure can be easily dispersed, and a thermal stability and smoothness thereof are good. The scratch resistant agent is dispersed in the polyurethane emulsion (solution), and thus a hardness of a paint film is improved, and effect of resisting exterior forces is performed, such that an object of the scratch resistance is realized; meanwhile, a smoothness of the coating layer surface is also improved, and an acting force can be dispersed to larger areas when an exterior force is applied, and thus an object of scratch resistance is also realized.

According to embodiments of the present disclosure, the above-mentioned extinction agent is at least one selected from silica, micronizing wax and an organic extinction agent, in which the extinction agent has an average particle diameter in the range of 1 micron to 10 microns, a specific weight in the range of 1 g/cm³ to 1.5 g/cm³, a refractive index in the range of 1.4 to 1.6 and a water content of lower than 5%. The extinction agent used in the present disclosure is dispersed in the polyurethane dispersion, and a microscopically ragged effectiveness can be formed on the coating layer surface after drying, and then a diffuse reflection is generated to produce an extinction effect.

According to embodiments of the present disclosure, the above-mentioned wetting agent is at least one selected from ethanol, isopropanol, modified polysiloxane and unmodified polysiloxane. A wetting ability of the scratch resistant varnish on the BOPP, BOPET or BOPA surface can be improved by the wetting agent, and the binding force between the coating layer and BOPP, BOPET or BOPA is improved, while making the coating layer surface more flat and denser.

According to embodiments of the present disclosure, the above-mentioned defoamer is at least one selected from polydimethylsiloxane, ethanol and polyoxypropylene glycerol ether. Small bubbles formed by high-speed stirring and cross linking reaction are eliminated, and the influences of the bubbles on the appearance of the coating layer are eliminated by the defoamer used in the present disclosure.

According to embodiments of the present disclosure, the above-mentioned film-forming agent is at least one selected from N-methyl-2-pyrrolidone, dodecanol ester, glycol and diethylene glycol monobutyl ether. A film-forming property of the polyurethane dispersion can be improved, and a film-forming of the polyurethane is helped by the film-forming agent used in the present disclosure, and then the film-forming agent is volatilized after film-forming, and a property of the coating layer cannot be influenced.

According to embodiments of the present disclosure, the above-mentioned cross-linking curing agent is at least one selected from multifunctional alaziridine, polycarbodiimide, HDI tripolymer and HDI-IPDI composite tripolymer. A cross linking reaction is generated between a hydroxyl and carboxyl in the polyurethane dispersion and the cross-linking curing agent used in the present disclosure, and thus the hardness of the paint film and the adhesive force of the paint film for the substrate is improved.

According to embodiments of the present disclosure, the intermediate layer 2 is formed by polyethyleneimine. According to embodiments of the present disclosure, the hot melt adhesive layer 3 is formed by at least one selected from ethylene-vinyl acetate (EVA), low density polyethylene (LDPE), ethylene-ethyl acrylate (EEA) and ethylene-methyl acrylate (EMA). According to examples of the present disclosure, the intermediate layer 2 and the hot melt adhesive layer 3 are uniformly coated on the surface of the scratch resistant matte substrate successively.

According to an example of the present disclosure, a thickness of the scratch resistant matte substrate 1 ranges from 13 microns to 110 microns, a thickness of the intermediate layer 2 ranges from 0.01 microns to 0.03 microns (an amount of the coating is 0.009 g/m² to 0.011 g/m²), and a thickness of the hot melt adhesive layer 3 ranges from 25 microns to 100 microns. According to another example of the present disclosure, the thickness of the scratch resistant matte substrate 1 ranges from 13 microns to 85 microns, the thickness of the intermediate layer 2 ranges from 0.01 microns to 0.02 microns (an amount of the coating is 0.009 g/m² to 0.010 g/m²), and the thickness of the hot melt adhesive layer 3 ranges from 30 microns to 100 microns.

In another aspect of the present disclosure, a method for preparing above-mentioned scratch resistant matte thermal laminating film is provided. The method comprises: performing an electric corona treatment on a surface of a scratch resistant matte substrate; forming an intermediate layer on the surface of the scratch resistant matte substrate processed through the electric corona treatment; drying the scratch resistant matte substrate and the intermediate layer at 85 °C to 95 °C; and forming by using an extruder the hot melt adhesive layer on the intermediate layer after drying, so as to obtain the scratch resistant matte thermal laminating film. According to specific embodiments of the present disclosure, a polymer film layer is provided, the polymer film layer is formed by at least one selected from biaxially oriented polypropylene, biaxially oriented polyester and biaxially oriented nylon; coating a scratch resistant matte varnish on a lower surface of the polymer film layer by a roller, so as to form a scratch resistant matte coating layer; and performing a drying treatment to form the scratch resistant matte substrate. A better scratch resistant ability can be provided by the thermal laminating film obtained by the method, and thus a probability of generating a scuffing is decreased during transportation and use, and a perfect appearance of the printing object is maintained. Meanwhile, a higher surface tension is maintained by the thermal laminating film prepared by the method, and an elegant and steady impression of the printing product is given by the matte and high haze of the thermal laminating film, and therefore a product quality is promoted, and the demands of high-end customers in the thermal laminating film industry are satisfied.

According to embodiments of the present disclosure, one uniform scratch resistant matte coating layer with no chromatic aberration and good adhesive force is generated on an external surface of a film layer of general BOPP, BOPET or BOPA polymer by a coating process, so as to obtain a scratch resistant matte film substrate. According to embodiments of the present disclosure, 60 weight parts to 90 weight parts of the polyurethane dispersion, 1 weight part to 10 weight parts of the scratch resistant agent, 3 weight parts to 10 weight parts of a dulling agent, 0.05 weight parts to 0.2 weight parts of the wetting agent, 0.1 weight parts to 0.5 weight parts of the defoamer, 1 weight part to 15 weight parts of the cross-linking curing agent and other components are mixed uniformly, and according to the need, 1 weight part to 5 weight parts of the film-forming agent may be further added, and then, the scratch resistant matte coating layer is coated on the surface of the BOPP, BOPET or BOPA polymer film, so as to obtain a scratch resistant matte BOPP substrate, a scratch resistant matte BOPET substrate or a scratch resistant matte BOPA substrate. According to examples of the present disclosure, the above-mentioned scratch resistant matte substrate is laid on an unreeling machine, and unreeled by an inflatable shaft. According to embodiments of the present disclosure, an electric corona treatment is performed on the surface of the above-mentioned scratch resistant matte substrate, so that a dyne value of the above-mentioned scratch resistant matte substrate reaches 36 dynes to 54 dynes: a dyne value of the scratch resistant matte BOPP substrate reaches 36 dynes, and a dyne value of the scratch resistant matte BOPET substrate or the scratch resistant matte BOPA substrate reaches 54 dynes.

According to embodiments of the present disclosure, the polyethyleneimine (PEI) aqueous solution with a solid content of 0.5 wt% to 1.5 wt% is prepared by adding water to the polyethyleneimine (PEI) aqueous solution with a solid content of 5 wt% to 10 wt%, and stirred uniformly to obtain a material of the intermediate layer. According to embodiments of the present disclosure, the intermediate layer is formed by coating the aqueous solution of the polyethyleneimine on the surface of the scratch resistant matte substrate processed through the electric corona treatment, in which a solid content of the aqueous solution of the polyethyleneimine ranges from 0.5 wt% to 1.5 wt%, and a usage amount of the aqueous solution of the polyethyleneimine is 0.01 g/m². The method for preparing 0.5 wt% to 1.5 wt% of the aqueous solution of the polyethyleneimine is not limited especially. According to examples of the present disclosure, the polyethyleneimine (PEI) aqueous solution with a solid content of 0.5 wt% to 1.5 wt% is prepared by adding water to the polyethyleneimine (PEI) aqueous solution with a solid content of 5 wt% to 10 wt%. According to examples of the present disclosure, drying is performed at 85 °C to 95 °C using a stoving equipment, so that the polyethyleneimine (PEI) is cured on the surface of the scratch resistant matte substrate, and thus the scratch resistant matte substrate and the intermediate layer is formed, so as to obtain the intermediate layer with a thickness in the range of about 0.01 microns to 0.03 microns.

According to embodiments of the present disclosure, the hot melt adhesive layer is formed on the dried intermediate layer by using the extruder, so as to obtain the scratch resistant matte thermal laminating film. According to one embodiments of the present disclosure, the scratch resistant matte substrate loaded with stoved polyethyleneimine (PEI) is sent to a composite part by a guide roller in the extrusion composite production line, and the material of the hot melt adhesive layer is extruded onto the scratch resistant matte substrate by the extruder. According to another embodiment of the present disclosure, an ozone generator is placed at a side of the composite part of the extrusion composite production line, and ozone generated by the ozone generator is blown to a cast point of the hot melt adhesive layer extruded by the extruder. The concentration of the ozone is 40 vol%, and a power is 800W, a gas flow is 3.5SCXFM, in which the ozone allows some polar groups to be generated on the surface of the hot melt adhesive layer, and then the scratch resistant matte substrate loaded with the polyethyleneimine (PEI) and the hot melt adhesive cast film are bonded to each other by a squeezing of an intermeshing roller placed in the composite part of the extrusion composite production line, to form a composite film. After being subjected to stretching, cooling and deburring, the composite film is fed into a thickness gauge to be checked. According to embodiments of the present disclosure, a pressure of the intermeshing roller is 35PSI, and set temperature values of the extruder are 130 °C, 160 °C, 190 °C, 200 °C, 220 °C, 220 °C, 220 °C, 220 °C, 220 °C, 220 °C, 220 °C, 220 °C, 220 °C, 220 °C, 220 °C, 220 °C, 220 °C, 220 °C respectively.

According to embodiments of the present disclosure, the thickness of the thermal laminating film is measured by using a β-ray gauge. After measuring, a measuring result is fed back to a computer, and a screw speed and a die gap of a die part of the extruder are controlled by the computer, so as to obtain the thermal laminating film with a uniform thickness.

According to embodiments of the present disclosure, after forming the hot melt adhesive layer, a second electric corona treatment is further performed, so as to obtain a certain amount of the polar group, so that the surface dyne value of the hot melt adhesive layer is equal to or higher than 50 dynes.

According to embodiments of the present disclosure, the thermal laminating film processed through the second electric corona treatment is winded into a coiled material by using a winding machine. According to embodiments of the present disclosure, the thermal laminating film wound into the coiled material by the winding machine is cut into slit rolls with a width and length required by a customer.

### Example 1

### Preparation of scratch resistance matte BOPP substrate

75 weight parts of an aliphatic polyurethane aqueous emulsion (in which the solid content of the polyurethane dispersion was 20 wt%, the mass percentage of hydroxyl in the polyurethane dispersion was 1 wt%), 5 weight parts of a polysiloxane cross-linking spherical micropowder (scratch resistant agent), 3 weight parts of an organic extinction agent (ST-8 having an average particle diameter of 5 microns to 10 microns, a specific weight of 1.06g/cm³, a refractive index of 1.59, and a water content of lower than 5%), 0.2 weight parts of polydimethylsiloxane (flatting and wetting agent), 0.5 weight parts of ethanol (defoamer), 2.5 weight parts of N-methyl-2-pyrrolidone (film-forming agent) and 1 weight part of multi-crosslink alaziridine (cross-linking curing agent) were mixed in a high speed mixer and filtered. The filtrate was coated on a surface of a commercially available matte BOPP film (with a specification of 15 µm × 1420 mm × 12000 m) by means of a roller and dried to form a scratch resistant matte substrate with a specification of 18 µm × 1420 mm × 12000 m.

### Preparation of scratch resistant matte BOPP thermal laminating film

The thermal laminating film was formed by successively coating 0.01 µm of the PEI intermediate layer, 25 µm of the composite hot melt adhesive EVA layer on the light surface of above-mentioned scratch resistant matte BOPP substrate. Because trimming cut was needed when compositing the hot melt adhesive layer, the specification of the final scratch resistant matte BOPP thermal laminating film was 43 µm × 1400 mm × 12000 m. The processing method thereof was as follows:
1) Preparation of intermediate material: a polyethyleneimine (PEI) aqueous solution with a solid content of 5 wt% was adjusted into a polyethyleneimine (PEI) aqueous solution with a solid content of 0.95 wt%, which was stirred uniformly to obtain a material of the intermediate layer.
2) Unreeling: the scratch resistant matte substrate with a width of 1420 mm was laid on the unreeling machine, and unreeled by the inflatable shaft; the thickness thereof was 18 µm.
3) Pre-electric corona treatment: the electric corona treatment was performed on the light surface of the scratch resistant matte substrate passed through the unreeling machine, so that the dyne value thereof reaches 36 dynes.
4) Coating of intermediate layer: the above-mentioned scratch resistant matte substrate was passed through a primer coating equipment, the material of the intermediate layer was coated on the surface of the scratch resistant matte substrate processed through the electric corona treatment, and the usage amount of the material of the intermediate layer was 0.01 g/m².
5) First drying: the scratch resistant matte substrate coated with the polyethyleneimine (PEI) aqueous solution was stoved by using a stoving equipment, so that polyethyleneimine (PEI) was cured on the surface of the scratch resistant matte substrate. The stoving temperature ranged from 85 °C to 95 °C. After stoving, the thickness of the intermediate layer was 0.01 microns.
6) Compositing of hot melt adhesive EVA layer: the scratch resistant matte substrate loaded with a dried polyethyleneimine (PEI) was sent to the composite part by the guide roller of the extrusion composite production line, and the EVA was extruded onto the scratch resistant matte substrate by the extruder. The ozone generator was placed at the side of the composite part of the extrusion composite production line, and the ozone generated by the ozone generator was blown to a cast point of the hot melt adhesive EVA layer extruded by the extruder. The concentration of the ozone was 40 vol%, and a power was 800W, a gas flow was 3.5SCXFM, in which the ozone allowed some polar groups to be generated on the surface of the hot melt adhesive EVA layer, and then the scratch resistant matte substrate loaded with the polyethyleneimine (PEI) and the EVA cast film were bonded to each other by the squeezing of the intermeshing roller placed in the composite part of the extrusion composite production line, to form the composite film. After being subjected to stretching, cooling and deburring, the composite film was fed into a thickness gauge to be checked. The thickness of the hot melt adhesive layer used was controlled to be 25 µm by adjusting the extrusion output amount of the extruder.

The pressure of the intermeshing roller was 35PSI, and the set temperature values of the extruder were 130 °C, 160 °C, 190 °C, 200 °C, 220 °C, 220 °C, 220 °C, 220 °C, 220 °C, 220 °C, 220 °C, 220 °C, 220 °C, 220 °C, 220 °C, 220 °C, 220 °C, 220 °C respectively.
7) Measurement and adjustment of thickness: the thickness of the thermal laminating film was measured by using the β-ray gauge. After measuring, a measuring result was fed back to a computer, and a screw speed and a die gap of a die part of the extruder were controlled by the computer, so as to obtain the thermal laminating film with a uniform thickness.
8) Post-electric corona treatment: the electric corona treatment was performed on the surface of the hot melt adhesive EVA layer, so as to obtain a certain amount of a polar group, so that the surface dyne value thereof was equal to or higher than 50 dynes.
9) Winding: the thermal laminating film after performing the post-electric corona treatment was winded into a coiled material by using a winding machine.

### Example 2

### Preparation of resistance matte BOPET substrate

60 weight parts of a polycarbonate type polyurethane solution (in which the solid content of the polycarbonate was 30 wt%, the mass percentage of hydroxyl in the polyurethane solution was 3 wt%), 1 weight part of the polyethylene wax scratch resistant agent (AQUACER 1547 with a melting point of 125°C comprising 35 wt% of a non-volatile matter), 10 weight parts of the silica dulling agent (OK520), 0.05 weight parts of the flatting and wetting agent polyether modified polydimethylsiloxane (BD-3308), 0.3 weight parts of the defoamer (XPT-118) and 7.5 weight parts of the aliphatic polyisocyanate curing agent (Z4470 SN) were mixed in the high speed mixer and filtered. The filtrate was coated on one surface of a commercially available BOPET light film (with a specification of 12 µm × 1670 mm × 12000 m) by means of the roller and dried to form a scratch resistance matte BOPET substrate with a specification of 13 µm × 1670 mm × 12000 m.

### Preparation of scratch resistant matte BOPET thermal laminating film

The thermal laminating film was formed by successively coating 0.02 µm of the PEI intermediate layer, 100 µm of the composite hot melt adhesive LDPE layer on the light surface of the above-mentioned scratch resistant matte BOPET substrate. Because trimming cut was needed when compositing the hot melt adhesive layer, the specification of the final scratch resistant matte BOPET thermal laminating film was 113 µm × 1650 mm × 12000 m. The processing method thereof was similar to that in example 1, except that: in Example 2, LDPE was used as the material of the hot melt adhesive layer, and the thickness of the hot melt adhesive layer was 100 µm.

### Example 3

### Preparation of scratch resistant matte BOPP substrate

90 weight parts of a polyester type polyurethane dispersion, 10 weight parts of methyl methacrylate (MTX-50 with an average particle diameter of 5 microns, and an apparent specific weight of 0.9g/cm³), 6.5 weight parts of the micronizing wax (CERAFLOUR 928 with a melting point of 115°C), 0.125 weight parts of isopropanol (flatting and wetting agent), 0.1 weight parts of polyoxypropylene glycerol ether, 5 weight parts of glycol (film-forming agent), and 15 weight parts of polycarbodiimide was mixed in the high speed mixer and filtered. The filtrate was coated on a matte surface of a commercially available matte BOPP film (with a specification of 100 µm × 1420 mm × 12000 m) by means of the roller and dried to form a scratch resistant matte substrate with a specification of 110 µm × 1420 mm × 12000 m.

### Preparation of scratch resistant matte BOPP thermal laminating film

The thermal laminating film was formed by successively coating 0.03 µm of the PEI intermediate layer, 50 µm of the composite hot melt adhesive EVA layer on the light surface of above-mentioned scratch resistant matte BOPP substrate. Because trimming cut was needed when compositing the hot melt adhesive layer, the specification of the final scratch resistant matte BOPP thermal laminating film was 160 µm × 1400 mm × 12000 m. The processing method thereof was as follows:
1) Preparation of intermediate material: a polyethyleneimine (PEI) aqueous solution with a solid content of 5 wt% was adjusted into a polyethyleneimine (PEI) aqueous solution with a solid content of 0.95 wt%, which was stirred uniformly to obtain a material of the intermediate layer.
2) Unreeling: the scratch resistant matte substrate with a width of 1420 mm was laid on the unreeling machine, and unreeled by the inflatable shaft; the thickness thereof was 110 µm.
3) Pre-electric corona treatment: the electric corona treatment was performed on the light surface of the scratch resistant matte substrate passed through the unreeling machine, so that the dyne value thereof reaches 36 dynes.
4) Coating of intermediate layer: the above-mentioned scratch resistant matte substrate was passed through a primer coating equipment, the material of the intermediate layer was coated on the surface of the scratch resistant matte substrate processed through the electric corona treatment, and the usage amount of the material of the intermediate layer was 0.01 g/m².
5) First drying: the scratch resistant matte substrate coated with the polyethyleneimine (PEI) aqueous solution was stoved by using a stoving equipment, so that the polyethyleneimine (PEI) was cured on the surface of the scratch resistant matte substrate. The stoving temperature ranged from 85 °C to 95 °C. After stoving, the thickness of the intermediate layer was about 0.03 microns.
6) Compositing of hot melt adhesive EVA layer: the scratch resistant matte substrate loaded with a dried polyethyleneimine (PEI) was sent to the composite part by the guide roller of the extrusion composite production line, and the EVA was extruded onto the scratch resistant matte substrate by the extruder. The ozone generator was placed at the side of the composite part of the extrusion composite production line, and the ozone generated by the ozone generator was blown to a cast point of the hot melt adhesive EVA layer extruded by the extruder. The concentration of the ozone was 40 vol%, and a power was 800W, a gas flow was 3.5SCXFM, in which the ozone allowed some polar groups to be generated on the surface of the hot melt adhesive EVA layer, and then the scratch resistant matte substrate loaded with the polyethyleneimine (PEI) and the EVA cast film were bonded to each other by the squeezing of the intermeshing roller placed in the composite part of the extrusion composite production line, to form the composite film. After being subjected to stretching, cooling and deburring, the composite film was fed into a thickness gauge to be checked. The thickness of the hot melt adhesive layer used was controlled to be 50 µm by adjusting the extrusion output amount of the extruder. The pressure of the intermeshing roller was 35PSI, and the set temperature values of the extruder were 130 °C, 160 °C, 190 °C, 200 °C, 220 °C, 220 °C, 220 °C, 220 °C, 220 °C, 220 °C, 220 °C, 220 °C, 220 °C, 220 °C, 220 °C, 220 °C, 220 °C, 220 °C respectively.
7) Measurement and adjustment of thickness: the thickness of the thermal laminating film was measured by using the β-ray gauge. After measuring, a measuring result was fed back to a computer, and a screw speed and a die gap of a die part of the extruder were controlled by the computer, so as to obtain the thermal laminating film with a uniform thickness.
8) Post-electric corona treatment: the electric corona treatment was performed on the surface of the hot melt adhesive EVA layer, so as to obtain a certain amount of a polar group, so that the surface dyne value thereof was equal to or higher than 50 dynes.
9) Winding: the thermal laminating film after performing the post-electric corona treatment was winded into a coiled material by using a winding machine.

The property test results of the examples are shown as follows:

| Example | Total thickness (µm) | Surface tension (dyne) | Pencil hardness of scratch resistant surface | Haze of scratch resistant substrate (1) (%) | Gloss of scratch resistant substrate (1) (60 vancometer) |
|---|---|---|---|---|---|
| Example 1 | 43 | 42 | 2H | 71.33 | 13.2 |
| Example 2 | 113 | 40 | 2H | 74.37 | 11.3 |
| Example 3 | 160 | 44 | 3H | 73.27 | 12.2 |

As shown from the above table, the scratch resistant matte thermal laminating film prepared in the present disclosure has a good surface hardness, and thus the property of the scratch resistance and scuffing resistance of a surface of the scratch resistant matte thermal laminating film are improved; at the same time, a higher surface tension is shown on the external surface of the scratch resistant thermal laminating film, and thus a further treatment such as UV printing, gold stamping and so on may be performed on the surface directly.

In the description of the present disclosure, it is to be understood that terms such as "central", "longitudinal", "lateral", "length", "width", "thickness", "up", "down", "front", "rear", "right", "left", "vertical", "horizontal", "top", "bottom" , "inner", "outer", "clockwise", "anticlockwise" should be construed to refer to the orientation or position as shown in the drawings under discussion. These relative terms are for convenience of description and do not indicate or imply that the apparatus or members must have a particular orientation or be constructed and operated in a particular orientation. Therefore, these terms shall not be construed to limit the present disclosure.

In addition, terms such as "first" and "second" are used herein for purposes of description and are not intended to indicate or imply relative importance or significance. Thus, features limited by "first" and "second" are intended to indicate or imply including one or more than one these features. In the description of the present disclosure, "a plurality of" relates to two or more than two.

In the description of the present disclosure, unless otherwise stipulated and restricted, a structure, in which a first feature is "on" or "below" a second feature may include an embodiment in which the first feature directly contacts the second feature, or the first feature and the second feature are contacted indirectly through intermediation. Furthermore, a first feature "on," "above," or "on top of" a second feature may include an embodiment in which the first feature is right "on," "above," or "on top of" the second feature, or just means that the first feature is at a height higher than that of the second feature. While a first feature "beneath," "below," or "on bottom of" a second feature may include an embodiment in which the first feature is right "beneath," "below," or "on bottom of" the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the phrases throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, amendments, alternatives, and modifications can be made in the embodiments without departing from spirit, principles and scope of the present disclosure.

## Claims

1. A scratch resistant matte thermal laminating film, comprising a scratch resistant matte substrate, an intermediate layer and a hot melt adhesive layer,
wherein the intermediate layer is formed between the scratch resistant matte substrate and the hot melt adhesive layer, and the scratch resistant matte substrate is composed by a polymer film layer and a scratch resistant matte coating layer, in which the scratch resistant matte coating layer is formed on a lower surface of the polymer film layer.

2. The scratch resistant matte thermal laminating film according to claim 1, wherein the polymer film layer is formed by at least one selected from biaxially oriented polypropylene, biaxially oriented polyester and biaxially oriented nylon.

3. The scratch resistant matte thermal laminating film according to claim 1, wherein the scratch resistant matte coating layer is formed by coating a scratch resistant varnish on the lower surface of the polymer film layer, in which the scratch resistant varnish comprises:
60 weight parts to 90 weight parts of a polyurethane dispersion;
1 weight part to 10 weight parts of a scratch resistant agent;
3 weight parts to 10 weight parts of an extinction agent;
0.05 weight parts to 0.2 weight parts of a flatting and wetting agent;
0.1 weight parts to 0.5 weight parts of a defoamer; and
1 weight part to 15 weight parts of a cross-linking curing agent.

4. The scratch resistant matte thermal laminating film according to claim 3, wherein the scratch resistant varnish further comprises 1 weight part to 5 weight parts of a film-forming agent.

5. The scratch resistant matte thermal laminating film according to claim 3, wherein the polyurethane dispersion is at least one selected from an acrylic acid-modified polyurethane dispersion, a polyester-modified polyurethane dispersion, a polycarbonate-modified polyurethane dispersion and an aliphatic series-modified polyurethane dispersion.

6. The scratch resistant matte thermal laminating film according to claim 5, wherein a solid content of the polyurethane dispersion ranges from 20 wt% to 40 wt%, and a mass percentage of hydroxyl in the polyurethane dispersion ranges from 1 wt% to 4 wt%.

7. The scratch resistant matte thermal laminating film according to claim 3, wherein the scratch resistant agent is at least one selected from silica, silicone resin, methyl methacrylate, polyethylene wax powder and polytetrafluoroethylene wax powder,
in which the scratch resistant agent has an average particle diameter in the range of 1 to 10 microns, and a melting point of equal to or higher than 110 °C, and a specific weight in the range of 0.9 to 1.1 g/cm³.

8. The scratch resistant matte thermal laminating film according to claim 3, wherein the extinction agent is at least one selected from silica, micronizing wax and an organic extinction agent,
in which the extinction agent has an average particle diameter in the range of 1 micron to 10 microns, a specific weight in the range of 1 to 1.5 g/cm³, a refractive index in the range of 1.4 to 1.6 and a water content of lower than 5%.

9. The scratch resistant matte thermal laminating film according to claim 3, wherein the flatting and wetting agent is at least one selected from ethanol, isopropanol, modified polysiloxane and unmodified polysiloxane.

10. The scratch resistant matte thermal laminating film according to claim 3, wherein the defoamer is at least one selected from polydimethylsiloxane, ethanol and polyoxypropylene glycerol ether.

11. The scratch resistant matte thermal laminating film according to claim 3, wherein the film-forming agent is at least one selected from N-methyl-2-pyrrolidone, dodecanol ester, glycol and diethylene glycol monobutyl ether.

12. The scratch resistant matte thermal laminating film according to claim 3, wherein the cross-linking curing agent is at least one selected from multifunctional alaziridine, polycarbodiimide, HDI tripolymer and HDI-IPDI composite tripolymer.

13. The scratch resistant matte thermal laminating film according to claim 1, wherein the intermediate layer is formed by polyethyleneimine.

14. The scratch resistant matte thermal laminating film according to claim 1, wherein the hot melt adhesive layer is formed by at least one selected from ethylene-vinyl acetate, low density polyethylene, ethylene-ethyl acrylate and ethylene-methyl acrylate.

15. The scratch resistant matte thermal laminating film according to claim 1, wherein a thickness of the scratch resistant matte substrate is between 13 microns and 110 microns, a thickness of the intermediate layer is between 0.01 microns and 0.03 microns, and a thickness of the hot melt adhesive layer is between 25 microns and 100 microns.

16. The scratch resistant matte thermal laminating film according to claim 15, wherein the thickness of the scratch resistant matte substrate is between 13 and 85 microns, the thickness of the intermediate layer is between 0.01 and 0.02 microns, and the thickness of the hot melt adhesive layer is between 30 and 100 microns.

17. The scratch resistant matte thermal laminating film according to claim 1, wherein a thickness of the polymer film layer is between 12 and 100 microns, and a thickness of the scratch resistant matte coating layer is between 1 and 10 microns.

18. A method for preparing a scratch resistant matte thermal laminating film according to any one of claims 1-17, comprising:
performing an electric corona treatment on an upper surface of the scratch resistant matte substrate;
forming an intermediate layer on the upper surface of the scratch resistant matte substrate processed through the electric corona treatment;
drying the scratch resistant matte substrate and the intermediate layer at 85 °C to 95 °C; and
forming by using an extruder the hot melt adhesive layer on the intermediate layer after drying, so as to obtain the scratch resistant matte thermal laminating film.

19. The method according to claim 18, wherein the scratch resistant matte substrate is obtained by:
providing the polymer film layer, in which the polymer film layer is formed by at least one selected from biaxially oriented polypropylene, biaxially oriented polyester and biaxially oriented nylon;
coating the scratch resistant matte varnish on the lower surface of the polymer film layer by a roller, so as to form the scratch resistant matte coating layer; and
performing a drying treatment to form the scratch resistant matte substrate.

20. The method according to claim 18, wherein a dyne value of the scratch resistant matte substrate ranges from 36 dynes to 54 dynes after the electric corona treatment.

21. The method according to claim 18, wherein the intermediate layer is formed by coating an aqueous solution of the polyethyleneimine on the upper surface of the scratch resistant matte substrate processed through the electric corona treatment, in which a solid content of the aqueous solution of the polyethyleneimine ranges from 0.5 wt% to 1.5 wt%, and a usage amount of the aqueous solution of the polyethyleneimine is 0.01 g/m².

22. The method according to claim 18, wherein ozone is applied to the scratch resistant matte substrate in forming the hot melt adhesive layer.

23. The method according to claim 22, wherein a concentration of the ozone is 40 vol% and a gas flow of the ozone is 3.5SCXFM.

24. The method according to claim 18, wherein a second electric corona treatment is further performed after forming the hot melt adhesive layer, so as to allow a surface dyne value of the hot melt adhesive layer to be equal to or higher than 50 dynes.
